(19) Europäisches Patentamt
European Patent Office
Office européen des brevets

(11) **EP 1 520 276 B1**

(12) **EUROPEAN PATENT SPECIFICATION**

(45) Date of publication and mention
of the grant of the patent:
**10.10.2007 Bulletin 2007/41**

(51) Int Cl.:
*G11B 27/28* (2006.01)    *G11B 27/10* (2006.01)
*G06F 17/30* (2006.01)

(21) Application number: **03761733.9**

(22) Date of filing: **20.06.2003**

(86) International application number:
**PCT/IB2003/002825**

(87) International publication number:
**WO 2004/003912 (08.01.2004 Gazette 2004/02)**

(54) **METHOD AND ARRANGEMENT FOR THE GENERATION OF AN IDENTIFICATION DATA BLOCK**

VERFAHREN UND ANORDNUNG ZUR ERZEUGUNG EINES IDENTIFIKATIONSDATENBLOCKS

PROCEDE ET DISPOSITIF DE GENERATION D'UN BLOC DE DONNEES D'IDENTIFICATION

(84) Designated Contracting States:
**AT BE BG CH CY CZ DE DK EE ES FI FR GB GR HU IE IT LI LU MC NL PT RO SE SI SK TR**

(30) Priority: **28.06.2002 EP 02100767**

(43) Date of publication of application:
**06.04.2005 Bulletin 2005/14**

(73) Proprietor: **Koninklijke Philips Electronics N.V.**
**5621 BA Eindhoven (NL)**

(72) Inventors:
• **SCHNEIDEREIT, Lutz**
**A-A 1101 Vienna (AT)**
• **WIMMER, Wolfgang**
**A-A 1101 Vienna (AT)**

(74) Representative: **Damen, Daniel Martijn et al**
**Philips**
**Intellectual Property & Standards**
**P.O. Box 220**
**5600 AE Eindhoven (NL)**

(56) References cited:
WO-A-02/46968          WO-A-92/07360
WO-A-97/05616          WO-A-98/25269
US-A1- 2003 028 721    US-A1- 2003 112 729
US-B1- 6 188 659       US-B1- 6 304 523

**Description**

The invention relates to a method of generating an identification data block for a data carrier, which data carrier comprises at least one track, wherein each track is defined by an item of start position (offset) information, wherein the identification data block is formed from part identification blocks by means of a gating function, wherein a first part identification block is formed from the item of start position (offset) information and a second part identification block is formed from a total for the number of tracks on the data carrier.

The invention further relates to an arrangement for generating an identification data block for a data carrier, which data carrier comprises at least one track, wherein each track is defined by an item of start position (offset) information, which arrangement comprises the means listed hereafter, namely determining means for determining the item of start position (offset) information, gating means for the generation of the identification data block by the gating of part identification blocks, first generating means for the generation of a first part identification block from the item of start position (offset) information, and second generating means for the generation of a second part identification block from a total for the number of tracks on the data carrier.

The invention further relates to a computer software product that is intended and arranged for carrying out a method as detailed in the first paragraph above.

The invention further relates to a computer that runs the computer software product detailed in the previous paragraph.

International Application WO 97/05616 discloses a system for playback of audio compact discs that uses information from the table of contents of an audio compact disc such as the movement number and the track duration in seconds, to generate identifying information relating to one or more compact discs. This identifying information can be used to subsequently select a compact disc in a CD changer, or to query a database for further information such as the title, track names, and artist name(s). US 6,304,523 discloses a similar system but one that does not use a modem or an ISDN terminal adapter to communicate with a remote database. International application WO 98/25269 discloses a method for identifying the information content of a prerecorded medium wherein a characteristic profile of the medium is established based on the physical or logical arrangement of data stored on a medium. WO 98/25269 in particularly discloses a relatively unique profile of an audio compact disc based on the number of tracks (N) and the length (L) of each track.

Certain known methods and known arrangements are known in connection with, for example, a CD database known as CDDB®. CDDB® is an internet-based service, that is to say a database on the internet, in which database is stored metadata such as, say, the titles, interpreters, playing time, etc, of many data carriers that are known in the form of compact disks, i.e. audio CDs. CDDB was developed to make it easier for such CDs to be entered up on a PC. The principle employed in this case is that a unique identification data block, or disk ID, or just ID, is generated from a table of contents (TOC) of a CD and is stored in the CDDB database, together with CD metadata or additional information relating to title, interpreter, etc., that has to be entered. Users who subsequently make use of the same CD have the metadata or additional information that is stored in the CDDB database displayed or made available to them and no longer need to enter it by hand. The enquiry format for the CDDB database is as follows: <Disk-ID>, <Number of tracks>, <Offset 1>, <Offset n>, <Total Second>.

The identification data block or disk ID is calculated by determining an offset or an item of start position information from the beginning of a CD to the beginning of the last track. The disk ID comprises four bytes. The first byte of the disk ID is determined from absolute start times or start position information for the tracks contained on the CD, which absolute start times have first been converted into values in seconds. The individual digits of the start times that have been converted into seconds are summed, with the first track beginning at a value of two (2) seconds. The second and third bytes of the disk ID comprise the total playing time in seconds, which total playing time is obtained from the sum of time at which the last track begins to play and the duration of the last track. The last byte of the disk ID is the number of tracks recorded in the CD. The known method was developed for audio CDs, in which case the number of tracks is limited to 99. As can easily be seen, because of the limited number of tracks, no influence can be exerted on the disk ID in the OR gating with the total playing time of the CD, as a result of which there is a disadvantageous reduction in diversification. Similarly, it can also easily be seen that the sum of individual digits of the start times of the individual tracks on the CD, which start times have been converted into seconds, is stored only in the second byte of the disk ID, which once again means that no great influence can be exerted on the disk ID and hence on diversification. The maximum influence on the disk ID is produced where the total playing time of a CD is 4800 seconds (80 minutes), when only the five most significant bits (MSB) are pre-gated with the sum of the start times. The disk ID generated by the known method is thus not unique enough to allow an audio CD to be exactly identified, because too little diversification is obtained. It is particularly CDs that have only one (1) to three (3) tracks that are not uniquely identified, which means that only a single disk ID is produced or generated for a plurality of CDs that are in fact different from one another, which is a very great disadvantage. For this reason, provision has to be made in the case of the CDDB database for additional enquiries, in the course of which a relatively complicated process of determining the metadata that belongs to or is stored for a disk ID takes place.

It is an object of the invention to overcome the restrictions detailed above and to provide an improved method of the kind detailed in the first paragraph, an improved arrangement of the kind detailed in the second paragraph, an improved computer software product of the kind detailed in the third paragraph, and an improved computer of the kind detailed in the fourth paragraph, in which the problems specified above are avoided.

To achieve the above object, features according to the invention are provided in a method according to the invention, such that a method according to the invention can be characterized as follows, namely:

A method of generating an identification data block for a data carrier, which data carrier comprises at least one track, wherein each track is defined by an item of start position information, wherein the identification data block is formed from part identification blocks by means of a gating function, wherein a first part identification block is formed from the items of start position information and a second part identification block is formed from a total for the number of tracks on the data carrier, characterized in that the first part identification block is formed from the items of start position information by means of an XOR gating operation and an XOR gating operation is then likewise used as a gating function.

To achieve the above object, features according to the invention are provided in an arrangement according to the invention, such that an arrangement according to the invention can be characterized as follows, namely:

An arrangement for generating an identification data block for a data carrier, which data carrier comprises at least one track, wherein each track is defined by an item of start position information, which arrangement comprises the means listed hereafter, namely determining means for determining the item of start position information, gating means for generating the identification data block by the gating of part identification blocks, first generating means for generating a first part identification block from the items of start position information and second generating means for generating a second part identification block from a total for the number of tracks on the data carrier, characterized in that the first generating means are arranged to generate the first part identification block by means of an XOR gating operation and in that the gating means are arranged to generate the identification data block by means of an XOR function.

To achieve the above object, features according to the invention are provided in a computer software product according to the invention, such that a computer software product according to the invention can be characterized as follows, namely:

A computer software product, which computer software product can be loaded directly into an internal storage means of a computer and comprises sections of software code, in which case the method claimed in claim 1 can be carried out with the computer when the computer software product is run on the computer.

To achieve the above object, features according to the invention are provided in a computer according to the invention, such that a computer according to the invention can be characterized as follows, namely:

A computer having a processing unit and an internal storage means, which computer runs the computer software product claimed in claim 12.

The provision of the features according to the invention produces, in a simple way, an improved method for the generation of an identification data block, in which case a major improvement can be seen in the fact that there is a very wide diversity of identification data blocks, or in other words that a very large number of CDs can be uniquely identified. A diversity of this kind is produced by the XOR gating of the part identification blocks. An increase in the diversification of identification data blocks for CDs is likewise obtained by XOR gating the items of start position (offset) information. Due to the data used to generate the identification data block, it is only with difficulty or at relatively high cost and complication that it is possible to determine an exact number of CDs that can be uniquely identified.

A further advantage is afforded by the fact that no additional means are required for picking up CDs that are present twice, i.e. ones that cannot be uniquely identified. What is particularly advantageous however is that even CDs that contain only a few tracks can be uniquely identified.

It has proved particularly advantageous if features as detailed in claims 2, 3, 4, 9 and 10 are provided. In this way, CDs conforming to the CD-ROM standard can also be identified. There are generally only one or two tracks on CDs of this kind but the tracks may contain a number of files. The files may for example contain audio data compressed according to the MP3 format.

By the provision of the features detailed in claim 6 and claim 7, the advantage of greater diversification is obtained for identification data blocks.

Furthermore, by the provision of the features detailed in claim 4 and claim 11 in the respective cases, additional diversification is obtained for disk IDs for disks that have tracks containing files.

What is advantageously achieved by the provision of the features detailed in claim 5, in an application of the method according to the invention and when use is being made of an identification data block generated thereby and when the identification data block generated is being transmitted to an arrangement for processing an identification data block of this kind, is that only a small number of bytes have to be transmitted yet the identification data block is still unique.

These and other aspects of the invention are apparent from and will be elucidated with reference to the embodiment described hereinafter, though the invention is not limited to this embodiment.

In the drawings:

Fig. 1 is a block circuit diagram that shows, in highly diagrammatic form, a part that is essential in the present connection of an arrangement according to one embodiment of the invention.

Fig. 2 is a flow chart relating to the generation of a part identification block from items of start position (offset) information for tracks and/or files.

Fig. 3 is a flow chart relating to the generation of a part identification block from the file names.

Fig. 4 is a block circuit diagram that shows, in highly diagrammatic form, a reproducing system for selecting desired data on a data carrier by means of an identification data block and a track/file identification data block.

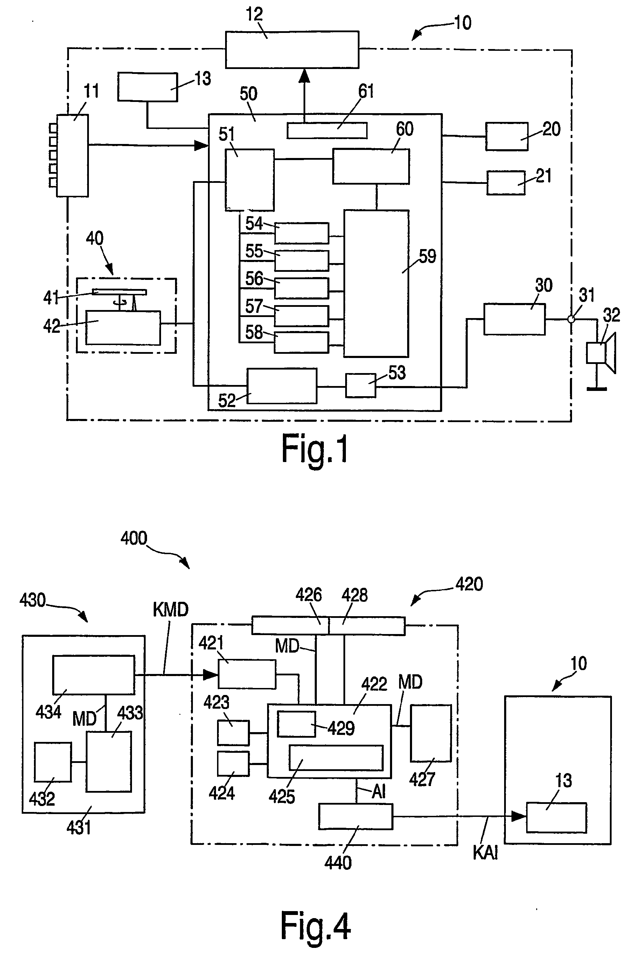

Shown in Fig. 1 is an arrangement for the generation of an identification data block, which arrangement is in the form of a reproducing arrangement 10 for reproducing a number of data carriers. The reproducing arrangement 10 contains receiving means for receiving a data carrier, which receiving means are formed by a changer module 40, which changer module 40 is intended and arranged to reproduce information or data that has been stored digitally, which digitally stored information is stored on data carriers 41 that can be read optically and that rotate at an angular velocity ω. In the present case, the optically readable data carriers 41 are formed by compact disks (CDs) and can each be brought to a reproducing position in the changer module 40 by a changing mechanism. The digitally stored information is stored in tracks on the data carriers 41 in accordance with a CD-ROM standard. It may be mentioned that the CDs may be either CR-R or CD-RW types. The information or data that is digitally stored on the optically readable data carriers 41 can be read and pre-processed by a scanning arrangement 42, which scanning arrangement 42 comprises a positionable optical reading unit and an associated positioning control unit. The data that is read out and pre-processed is transmitted to a central control unit (CPU) (50).

The central control unit (CPLT) 50 is in the form of a microprocessor and is coupled to a non-volatile memory ROM 20 and a volatile memory RAM 21, which ROM 20 and RAM 21 are intended and arranged for known purposes. The reproducing arrangement 10 further contains input means 11, which input means 11 are formed by keys that are mounted on the surface of the reproducing arrangement 10, that are connected to the central control unit (CPU) 50 and that are arranged for the input of control information by a user of the reproducing arrangement 10. Also contained in the reproducing arrangement 10 and connected to the central control unit (CPU) 50 is a remote-control sensor 13 that is arranged to receive infrared remote-control signals to the RC6 standard. The reproducing arrangement 10 further comprises display means 12 for displaying text and/or image information. The display means 12 are an LCD dot-matrix display in the present case, that is mounted on the surface of the reproducing arrangement 10. It may be mentioned that such display means 12 may equally well be formed by a VFD display or other similar displays.

Also contained in the reproducing arrangement 10 and connected to the central control unit (CPU) 50 is an amplifier module 30 for amplifying an analog audio signal, which amplified audio signal is transmitted to an amplifier output 31. Connected to the amplifier output 31 is an audio reproducing means 32 in the form of a loudspeaker, which loudspeaker is arranged to reproduce the amplified analog audio signal.

The central control unit (CPU) 50 contains a range of means and modules that are listed below and that are able to gain access to the RAM 21. Contained in this way are: a CD-module control unit 51 that is connected to the changer module 40 and is arranged to control the changer module 40 and to determine items of start position information and file names. Connected to the CD-module control unit 51 are first generating means 54, second generating means 55, third generating means 56, fourth generating means 57 and fifth generating means 58, which said generating means 54 to 58 are arranged to generate part identification blocks that will be dealt with in detail later on. The said generating means 54 to 58 are connected to gating means 59, the gating means 59 being intended and arranged to generate an identification data block from the part identification blocks. Connected to the gating means 59 and the CD-module control unit 51 are comparator means 60 that are arranged to compare identification data blocks and item of selection information. The central control unit (CPU) 50 further contains display driver means 61 by means of which data representing textual and/or image information is produced for the display means 12. The central control unit (CPU) 50 further contains audio-data decoding means 52 that are connected to the changer module 40 and are arranged to decode an audio signal. The decoded audio data is transmitted to a D/A converter 53, which D/A converter 53 generates an analog audio signal from the decoded audio data and transmits it to the amplifier module 30.

As has already been mentioned, the changer module 40 is intended and arranged to reproduce a number of CDs, the changer being a 5-disk changer in the present embodiment. The reproducing arrangement 10 and the advantageous features make it possible for the CDs contained in the changer module 40 to be selected and reproduced, that is to say on the basis of identification data blocks that are generated. The selection process will be looked at it more detail later on.

Described in detail below is the generation of the identification data block from the part identification blocks, in which case basic facts about stored data and items of start position (offset) information will first be explained by reference to an illustrative CD.

By means of the CD-module control unit 51, contents information, a so-called table of contents (TOC) is read out from the illustrative CD that is situated in the playback position in the changer module 40 and the data obtained is stored in the RAM 21. The illustrative CD that has been read from contains data arranged in a manner conforming to a CR-ROM standard, as shown in Table 1

**Table 1**

| CD | Name | LBA | Size (bytes) |
|---|---|---|---|
| Session 1 | Session 1 | 0 | 4,685,824 |
| Track 01 | Track 01 | 0 | 5,381,376 |
| Session 2 | Session 2 | 13688 | 927,744 |
| Track 02 | Track 02 | 13688 | 927,744 |
| ISO 010305_1421 | GUNS'N~7.MP3 | 13713 | 417,042 |
| 010305_1421 | GUNS 'N' ROSES - DON'T CRY.MP3 | 13712 | 417,042 |

The illustrative CD thus contains a session 1 having an audio track 01 and a session 2 having a data track 02. The data track 02 contains a file system to the ISO 9660 format and a file having the file name "GUNS 'N' ROSES - DON'T CRY.MP3", which file contains audio data that has been compressed under the known MPEG 1 layer III (MP3) standard. It may be mentioned that a data track may equally well contain a file system in a different format, such as the JOLIET format for example.

Shown in the column headed LBA are so-called logic block addresses, which logic block addresses define track and file start times, i.e. the items of information on the starting positions (offsets) of the tracks and files. The logic block addresses are specified in relation to the start time of a very first track on the CD. In the case of the present data track, 2048 bytes correspond, by definition, to a logic block for data tracks. In the case of the audio track, 2352 bytes correspond to a logic block for audio tracks, with 2048 of the bytes representing so-called raw data and the remaining bytes comprising correcting data and frame information data. Under the CD-ROM standard, the starting times of the tracks and the so-called lead-out LO can be determined from the TOC data or from time information stored on a subcode channel Q. This determination is carried out in the CD-module control unit 51, the time information being given in frames, where 75 frames equals one second. What are obtained for the illustrative CD cited above are track 01 = 150 frames, track 02 = 13838 frames and lead-out = 14291 frames. What lead-out means here is the lead-out of the last session that was completed. A precise relationship between the start times from the TOC and the logic block addresses LBA is given in Table 2 below for the illustrative CD cited:

**Table 2**

| Session | | S1 audio | | | | S2 digital | | | | |
|---|---|---|---|---|---|---|---|---|---|---|
| Size [sector bytes] | | | | 4,685,824 | | | | 927,744 | | |
| TOC | | Lin1 | Gap 1 | Track 01 | Lout 1 | Lin 1 | Gap 2 | Track 02 | | Lout2 |
| | Start [frames] | --- | --- | 150 | --- | --- | --- | 13,838 | | 14,291 |
| Blocks | | LI-S1 | Gap 1 | Track 01 | LO-S1 | LI-S2 | Gap 2 | Track 02 | | LO-S2 |
| | Size [different] | 1 min | 150 frames | 5,381,376 user bytes | 1.5 min | 1 min | 150 frames | 927,744 sector bytes | | 1.5 min |
| Files | | | | | | | | File system | File 2 | |
| | Size [different] | | | | | | | 25 frames | 417,042 sector bytes | |
| | Start [LBA] | --- | --- | 0 | 2,288 | 9,038 | 13,538 | 13,688 | 3,713 | 4,141 |

In Table 2, LI-S1 and LI-S2 mean the lead-in information for sessions S1 and S2 respectively and Gap1 and Gap2 mean the unoccupied gaps before the beginnings of the respective tracks, namely track 01 and track 02.

In the present case, five (5) part identification blocks are used to generate or form the identification data block, with an XOR gating of the part identification blocks being carried out in the gating means 59. In Table 3 below is shown a layout for the part identification blocks for the gating to form the identification data block ID.

| | *Part-ID3 (XOR of file name)* | | | |
|---|---|---|---|---|
| XOR | *Part-ID1 (XOR of track & file start times)* | | | |
| XOR | | *Part-ID5 (total playing time of CD)* | | |
| XOR | | | *Part-ID4 (number of files)* | |
| XOR | *Part-ID2 (number of tracks* | | | |
| ID | | | | |

**Table 3**

In this case, the identification data block ID comprises four (4) bytes corresponding to the blocks shown in Table 3, the blocks being numbered from right to left.

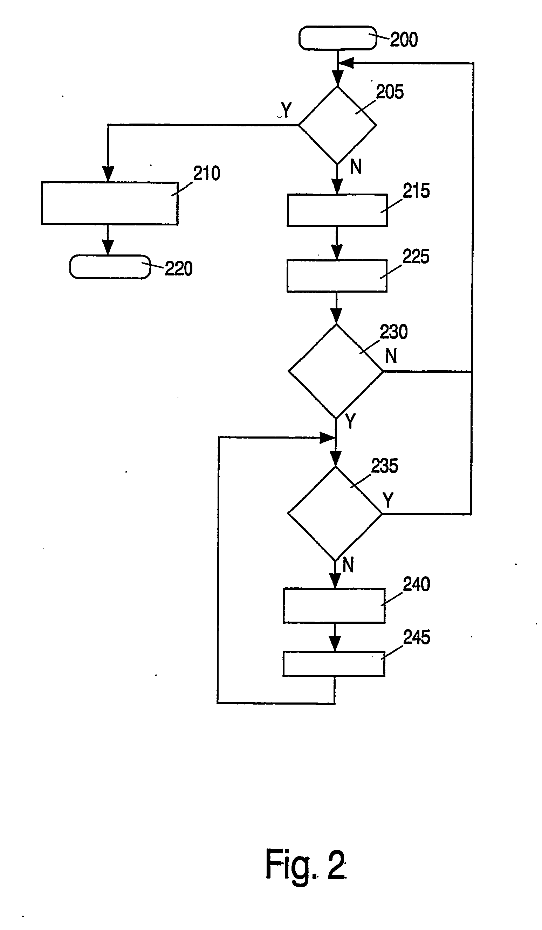

Fig. 2 shows a sequence in which a part identification block ID1 is generated from the track or file start-position information, i.e. the start times for tracks or LBAs for files, by the first generating means 54 and the CD-module control unit 51. The sequence is referred to below as the part-ID1 sequence. The part-ID1 sequence is carried out iteratively for a number of tracks on a relevant CD and begins at a start box 200, where a part-ID1 variable is set to 0x0 in the RAM 21. Then, according to a box 205, an enquiry is made as to whether a last track on the CD has already been read. If it has, a branch is made to a box 210; if not the sequence continues to box 215. According to box 215, the next track is read and the sequence then continues to box 225. What reading of the next track means in this case is the determination of the start position information. According to box 225, XOR gating of the item of start information that has been determined or read takes place with part-ID1. An enquiry is then made according to box 230 as to whether the track read is an audio track, or a data track containing files. If it is an audio track, the part-ID1 sequence continues to box 205. If, on the other hand, it is a data track, the sequence continues to a box 235. According to box 235, it is checked whether a final file in the data track has already been read. If it has, the part-ID1 sequence once again continues to block 205. If a final file has not been read, the sequence continues to box 240, where the next file is read. In this case too, reading of the next file means determination of the start position information. Following box 240, there then takes place, according to a box 245, XOR gating of the items of start position information that have been determined or read with the part-ID1 stored in RAM 21, after which the part-ID1 sequence continues to box 235. What is obtained for part-ID1 in the case of the illustrative CD cited above is:

$$\underline{\text{Part-ID1}} = \text{TOC(Track01) XOR TOC(track 02) XOR LBA (File2)} =$$

$$= 150 \text{ XOR } 13,838 \text{ XOR } 13,713 = \underline{0x309}$$

Finally, part-ID 1 having been generated or determined, there takes place according to box 210 by multiplication by a value 0x100 a shift of part-ID1 to a second byte position in the identification data block, as can be seen in Table 3, whereupon the part-ID1 sequence comes to an end according to a box 220.

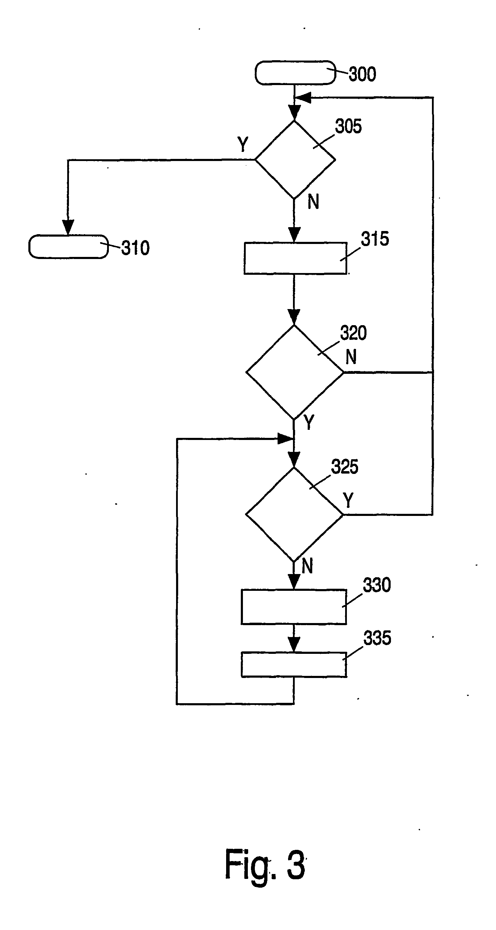

In Fig. 3 is shown a sequence in which a part identification block ID3 is generated from the file names by the third generating means 56 and the CD-module control unit 51. The sequence is referred to below as the part-ID3 sequence. The part-ID3 sequence once again defines an iterative read-in of tracks and files by means of the CD-module control unit 51 and begins at a start box 300, where a part-ID3 variable comprising four (4) bytes is set to 0x0 in the RAM 21. Then, according to a box 305, an enquiry is made as to whether a last track on the CD has already been read. If it has, a branch is made to a box 310; if not the sequence continues to box 315. According to box 315 the next track is read, whereupon an enquiry is made according to a box 320 as to whether the track read is an audio track, or a data track containing files. If it is an audio track, the part-ID3 sequence continues to box 305. If on the other hand it is a data track, the sequence continues to a box 325. According to box 325 it is checked whether a final file in the data track has already been read. If it has, the part-ID3 sequence once again continues to block 305. If a final file has not been read, the sequence continues to box 330. According to box 330 the file name of the next file is read and the sequence then continues to a box 335. According to box 335, the formation of part-ID3 finally takes place by the XOR gating of characters of the file name, thus producing a part-ID3 that has the same number of bytes. In the present case, a division of the characters in the file name into blocks is carried out, the division being made into blocks each containing four (4) characters, in which case four (4) character positions are obtained in a block with the character positions each representing one byte. The XOR gating takes place in each block with the characters in each character position in the block, meaning for example that the characters one (1), five (5), nine (9) etc. are gated and form the first byte of part-ID1. The characters two (2), six (6), ten (10) etc. form the second byte of part-ID1. In the division into blocks, missing characters, or character positions that are unoccupied in a final block due to the division, are set to zero (0). What is obtained for part-ID3 in the case of the illustrative CD cited above is:

$$\underline{\text{Part-ID3}} = 4 \text{ byte XOR of "GUNS 'N' ROSES - DON'T CRY.MP3"} = \underline{0x1244530951}$$

Part identification block part-ID2 is obtained by means of the second generating means 55 and the CD-module control unit 51, part-ID4 representing the total number of tracks on a CD.

Part identification block part-ID4 is obtained by means of the fourth generating means 57 and the CD-module control unit 51, part-ID4 representing the total number of files on a CD. The total number of tracks can easily be determined from the TOC that is read. The total number of files can be determined from the file system that is stored within the first 25 frames of a data track. In the case of the illustrative CD cited above, what is obtained for part-ID2 is $0 \times 1$ and what is obtained for part-ID4 is $0 \times 2$. As shown in Table 3, part-ID2 is set to the fourth byte position in the identification data block and part-ID4 is expanded to two (2) bytes.

As what is now the final part identification block, a part-ID5 is determined by means of the fifth generating means 58 and the CD-module control unit 51, the purpose of part-ID2 being an advantageous greater diversification of the identification data block. Part-ID5 represents the total length of a CD in this case. The total length is determined from the LBA and the size of the last completed session on a CD. What is obtained for part-ID5 in the case of the illustrative CD cited above is:

$$\underline{\text{Part-ID5}} = \text{LBA(Track02)} + \text{Size(Track 02)}/2048 \text{ (bytes/logic block)} =$$
$$= 13,688 + 927,744/2048 = \underline{0x373d}$$

Gating of part identification blocks part-ID 1 to part-ID5 by means of the gating means 59 produces, in the case of the illustrative CD cited above, an identification data block or a disk ID = 0x1210922811.

As has already been mentioned, the reproducing arrangement 10 is arranged to reproduce a number of data carriers 41, i.e. of CDs in the present case, by means of the changer module 40, thus producing a so-called jukebox or music-box. As has also already been mentioned, the CDs are so-called MP3 CDs that each contain a number of MP3 files, i.e. compressed audio files. In the present case where there are five (5) MP3 CDs, there may be a total number of up to a thousand (1000) MP3 files, which MP3 files should be easily selectable for the purposes of reproduction.

Shown in Fig.4 is a reproducing system 400 for such easy selection of MP3 files for the purpose of reproducing the said MP3 files. The reproducing system 400 contains a metadata generating arrangement 430, a remote-control arrangement 420 and a reproducing arrangement 10. The reproducing arrangement 10 is of the same design as the reproducing arrangement 10 shown in Fig. 1.

The metadata generating arrangement 430 is in the form of a computer 431, which computer 431 is arranged to run a computer software product for the generation of metadata information relating to at least one data carrier. The computer 431 contains receiving means 432 for receiving a data carrier, which receiving means 432 are connecting to metadata generating means 433. The metadata generating means 433 are arranged to generate and emit metadata MD to transmission means 434, the transmission means 434 being arranged to emit coded metadata KMD. The receiving means 432 are formed in the present case by a CD-ROM drive belonging to the computer 431, and substantially correspond to the changer module 40 of the reproducing arrangement 10, although it is only ever a single data carrier that can be received. The metadata generating means 433 contain modules and means that have already been described above in connection with Fig. 1 and by means of which an identification data block ID can be generated for a data carrier. These module and means are: the CD-module control unit 51, the generating means 54, 55, 56, 57 and 58 and the gating means 59.

From a data carrier of a type that was described above in connection with Fig. 1, which data carrier is inserted in the receiving means 432, metadata is generated with the help of the TOC read from the data carrier. The metadata comprises the follow data for each track or file recorded on the data carrier: title, name of interpreter, name of album, genre, and a track/file identification data block (FID) and an identification data block (disk ID) for the data carrier. The track/file identification data block FID is formed by reference to the start position (offset) information for the tracks or data files. For a track, this is the time information that can be obtained from the TOC. For data files, it is the sum of the time information for the track that contains a data file, and of an item of time information that is determined from the logic block address LBA of the data file relative to the logic block address LBA of the track. An item of time information is calculated or specified in the units of time hours, minutes, seconds and frames, with one (1) byte being used for each unit of time and with the hours occupying the byte in the most significant position and the frames the byte in the least significant position. What is obtained for the track/file identification data blocks in the case of the illustrative CD cited above is:

$$\underline{FID(track01)} = TOC(Track01) = 150 \text{ frames} = 00\!:\!00\!:\!02\!:\!00 \text{ [hh:mm:ss:ff]} = \underline{0x200}$$

$$\underline{FID(File\ 02)} = TOC(Track02) + (LBA(File02) - LBA(Track02)) =$$
$$= 13838 + (13713 - 13688) = 13863 \text{ frames} = 00\!:\!03\!:\!04\!:\!63 \text{ [hh:mm:ss:ff]} = \underline{0x30463}$$

It may be mentioned that there are storage means present in the metadata generating arrangement 430, which storage means are connected to the metadata generating means 433 and are arranged to store the metadata MD. The storage means may be formed by a hard disk of the computer 431.

The remote-control arrangement 420 is in the form of a so-called personal data assistant (PDA) in this case. The remote-control arrangement 420 has a central control unit 422 that is in the form of a microprocessor and that is coupled to a non-volatile memory ROM 424 and a volatile memory RAM 423, which ROM 424 and RAM 423 are intended and arranged for known purposes.

Connected to the central control unit 422 are reception means 421 that are arranged to receive and decode coded metadata KMD, storage means 427 that are arranged to store metadata MD, display means 426 that are arranged to display the metadata MD, and input means 428 for the input of input information. In the present case, the display means 426 and the input means 428 are formed by combined means that take the form of an LCD touch screen. The LCD touch screen operates on the resistance principle in this case, it being possible for input information to be generated on a surface of the LCD touch screen by means of a stylus or the like. It may be mentioned that other input means may equally well be provided, such as a keyboard or speech input means for example.

Contained in the central control unit 422 are metadata processing means 429 by which the metadata MD received by the reception means 421 can be processed and can be stored in the storage means 427. Also contained in the central control unit 422 are selecting information generating means 425, which selecting information generating means 425 allow the metadata MD to be displayed on the display means 426 and which selecting information generating means 425 are arranged to enable an item of selecting information AI to be generated with the help of the input means 428. The item of selecting information AI can be emitted to transmitting means 440, which transmitting means 440 are connected to the central control unit 422. The transmitting means 440 are arranged to emit coded selecting information KAI, the coded selecting information KIA being formed in this case by an infrared signal to the RC6 standard, the RC6 mode 1A - string type 3 being used. The coded selecting information KAI can be transmitted to reception means of the reproducing arrangement 10, which reception means are arranged to receive selecting information and which are formed by the remote-control sensor 13.

The metadata MD is stored in the storage means 427 of the remote control arrangement as a metadata list comprising list entries, which list entries represent the particular tracks or files on a data carrier by means of the particular sets of metadata MD. It may be mentioned that means are provided by which the metadata list can be managed, i.e. by which list entries can be added or deleted.

With the help of the selecting information generating means 425, metadata MD can be displayed, the metadata list being displayable in a variety of views, meaning that the list entries are sortable and displayable by certain criteria, such for example as by the name of the interpreter, by title, by genre or by other sort criteria. If a list entry is selected by means of the input means, an associated identification data block (disk ID) and a track/file identification data block (FID) are found for the list entry and transmitted to the playback arrangement 10 by the transmitting means 440 as selecting information.

In the playback arrangement 10, the selecting information received is processed in that a check is made by means of the comparator means 60 on whether identification data blocks found for data carriers in the changer module 40 match the identification data block from the selecting information AI received. If there is a match, the track/file identification data block FID received with the identification data block is passed on to the CD-module control unit 51, and in the CD-module control unit 51 a track or a file is caused to be played on that data carrier in which there is a matching identification data block. In the playback, coded audio data is transmitted to the audio data decoding means 52 in the present case.

If there is not a matching identification data block ID, the fact is notified by means of a display on the display means 12. It may be mentioned that notification may also be transmitted to the remote-control arrangement 420, in which case the reproducing arrangement 10 will then have transmitting means for transmitting a message of this kind. It may also be mentioned that the reproducing arrangement 10 can use the transmitting means mentioned to transmit generated identification data blocks IDs for data carriers contained in the changer module 40 to the remote control arrangement 10. The remote-control arrangement 10 is arranged to receive and process identification data blocks ID of this kind in this event, in which case a display of the metadata list may comprise only those list entries which have matching identification data blocks.

It may also be mentioned that the reproducing system 400 may be arranged to generate and process so-called play lists.

**Claims**

1. A method of generating an identification data block for a data carrier (41), which data carrier (41) comprises at least one track, wherein each track is defined by an item of start position information, wherein the identification data block is formed from part identification blocks by means of a gating function, wherein a first part identification block is formed from the items of start position information and a second part identification block is formed from the total number of tracks on the data carrier, **characterized in that** the first part identification block is formed from the items of start position information by means of an XOR gating operation and an XOR gating operation is then likewise used as a gating function.

2. A method as claimed in claim 1, wherein at least one track comprises a number of files having file names, use being made for generating the identification data block of, in addition, the file names to generate a third identification data block.

3. A method as claimed in claim 2, wherein characters of the file names are each individually gated by an XOR function.

4. A method as claimed in claim 2, wherein use is made for generating the identification data block of, in addition, a fourth part identification block, the total number of files, which is formed by the number of files, being used to generate the fourth identification data block.

5. A method as claimed in claim 1, wherein a data block having four bytes is generated as an identification data block.

6. A method as claimed in claim 5, wherein a data block having a single byte is generated as a second part identification data and, in the course of the XOR gating to generate the identification data block, this second part identification block is set to the fourth byte position in the identification data block.

7. A method as claimed in claim 5, wherein a data block having three bytes is generated as a first part identification block and, in the course of generating the identification data block, this first part identification block is set to the second byte position in the identification data block.

8. An arrangement (10) for generating an identification data block for a data carrier (41), which data carrier (41) comprises at least one track, wherein each track is defined by an item of start position information, which arrangement (10) comprises the means listed hereafter, namely determining means (51) for determining the item of start position information, gating means (59) for generating the identification data block by the gating of part identification blocks, first generating means (54) for generating a first part identification block from the items of start position information and second generating means (55) for generating a second part identification block from a total for the number of tracks on the data carrier, **characterized in that** the first generating means (54) are arranged to generate the first part identification block by means of an XOR gating operation and **in that** the gating means (59) are arranged to generate the identification data block by means of an XOR function.

9. An arrangement (10) as claimed in claim 8, wherein third generating means (56) are provided that are arranged to generate a third part identification block from file names of files that are contained in the tracks on the data carrier.

10. An arrangement (10) as claimed in claim 9, wherein the third generating means (56) are arranged to generate a third part identification block by means of an XOR gating operation.

11. An arrangement (10) as claimed in claim 8, wherein fourth generating means (57) are provided that are arranged to generate a fourth part identification block for generating the identification data block, a total number of files that represents the number files that are contained in the tracks on the data carrier being used for this purpose.

12. A computer software product, which computer software product can be loaded directly into an internal storage means of a computer and comprises sections of software code for carrying out the method claimed in claim 1 with the computer when the computer software product is run on the computer.

13. A computer software product as claimed in claim 12, wherein the product is stored on a computer-readable medium.

14. A computer having a processing unit and an internal storage means, which computer runs the computer software product claimed in claim 12.


**Patentansprüche**

1. Verfahren zum Generieren eines Identifikationsdatenblocks für einen Datenträger (41), welcher Datenträger (41) zumindest einen Track enthält, wobei jeder Track durch eine Startpositionsinformation bestimmt ist, wobei der Identifikationsdatenblock aus Identifikationsteilblöcken mittels einer Verknüpfungsfunktion gebildet wird, wobei ein erster Identifikationsteilblock aus den Startpositionsinformationen gebildet wird und ein zweiter Identifikationsteilblock aus der Gesamtzahl der Tracks des Datenträgers gebildet wird, **dadurch gekennzeichnet, dass** der erste Identifikationsteilblock aus den Startpositionsinformationen mittels einer XOR-Verknüpfung gebildet wird und dann als Verknüpfungsfunktion ebenso eine XOR-Verknüpfung verwendet wird.

2. Verfahren nach Anspruch 1, wobei zumindest ein Track eine Anzahl von Dateien mit Dateinamen enthält, wobei für das Generieren des Identifikationsdatenblocks zusätzlich die Dateinamen zum Generieren eines dritten Identifikationsteilblocks herangezogen werden.

3. Verfahren nach Anspruch 2, wobei Zeichen der Dateinamen je einzeln mittels einer XOR-Funktion verknüpft werden.

4. Verfahren nach Anspruch 2, wobei für das Generieren des Identifikationsdatenblocks zusätzlich ein vierter Identifikationsteilblock herangezogen wird, wobei zum Generieren des vierten Identifikationsteilblocks die Gesamtzahl der Dateien, die aus der Anzahl von Dateien gebildet ist, herangezogen wird.

5. Verfahren nach Anspruch 1, wobei als Identifikationsdatenblock ein Datenblock mit vier Bytes generiert wird.

6. Verfahren nach Anspruch 5, wobei als zweiter Identifikationsteilblock ein Datenblock mit einem einzigen Byte generiert wird und dieser zweite Identifikationsteilblock bei der XOR-Verknüpfung beim Generieren des Identifikationsdatenblocks an die vierte Byte-Position des Identifikationsdatenblocks gesetzt wird.

7. Verfahren nach Anspruch 5, wobei als erster Identifikationsteilblock ein Datenblock mit drei Bytes generiert wird und beim Generieren des Identifikationsdatenblocks dieser erste Identifikationsteilblock an die zweite Byte-Position des Identifikationsdatenblocks gesetzt wird.

8. Einrichtung (10) zum Generieren eines Identifikationsdatenblocks für einen Datenträger (41), welcher Datenträger (41) zumindest einen Track enthält, wobei jeder Track durch eine Startpositionsinformation bestimmt ist, welche Einrichtung (10) die nachfolgend angeführten Mittel umfasst, nämlich Ermittlungsmittel (51) zum Ermitteln der Startpositionsinformation, Verknüpfungsmittel (59) zum Generieren des Identifikationsdatenblocks durch Verknüpfen von Identifikationsteilblöcken, erste Generierungsmittel (54) zum Generieren eines ersten Identifikationsteilblocks aus den Startpositionsinformationen und zweite Generierungsmittel (55) zum Generieren eines zweiten Identifikationsteilblocks aus einer Gesamtzahl an Tracks des Datenträgers, **dadurch gekennzeichnet, dass** die ersten Generierungsmittel (54) zum Generieren des ersten Identifikationsteilblocks mit Hilfe einer XOR-Verknüpfung ausgebildet sind und dass die Verknüpfungsmittel (59) zum Generieren des Identifikationsdatenblocks mit Hilfe einer XOR-Funktion ausgebildet sind.

9. Einrichtung (10) nach Anspruch 8, wobei dritte Generierungsmittel (56) vorgesehen sind, die zum Generieren eines dritten Identifikationsteilblocks aus Dateinamen von Dateien, die in den Tracks des Datenträgers enthalten sind, ausgebildet sind.

10. Einrichtung (10) nach Anspruch 9, wobei die dritten Generierungsmittel (56) zum Generieren eines dritten Identifikationsteilblocks mit Hilfe einer XOR-Verknüpfung ausgebildet sind.

11. Einrichtung (10) nach Anspruch 8, wobei vierte Generierungsmittel (57) vorgesehen sind, die zum Generieren eines vierten Identifikationsteilblocks zum Generieren des Identifikationsdatenblocks ausgebildet sind, wobei zu diesem Zweck eine Gesamtzahl an Dateien herangezogen wird, die die Anzahl von Dateien repräsentiert, welche in den Tracks des Datenträgers enthalten sind.

12. Computersoftwareprodukt, welches Computersoftwareprodukt direkt in einen internen Speicher eines Computers geladen werden kann und Softwarecodeabschnitte umfasst, um mit dem Computer das Verfahren nach Anspruch 1 auszuführen, wenn das Computersoftwareprodukt auf dem Computer abgearbeitet wird.

13. Computersoftwareprodukt nach Anspruch 12, wobei das Produkt auf einem computerlesbaren Medium gespeichert ist.

14. Computer mit einer Verarbeitungseinheit und einem internen Speicher, welcher Computer das Computersoftwareprodukt nach Anspruch 12 abarbeitet.

## Revendications

1. Procédé de génération d'un bloc de données d'identification pour un support de données (41), ce support de données (41) comprenant au moins une piste, dans lequel chaque piste est définie par un élément d'information de position de début, dans lequel le bloc de données d'identification est formé de blocs d'identification de partie au moyen d'une fonction de portillonnage, un premier bloc d'identification de partie étant formé à partir des éléments d'information de position de début et un deuxième bloc d'identification de partie étant formé à partir du nombre total de pistes sur le support de données, **caractérisé en ce que** le premier bloc d'identification de partie est formé des éléments d'information de position de début au moyen d'une opération de portillonnage OU-exclusif, et une opération de portillonnage OU-exclusif est alors de même utilisée comme fonction de portillonnage.

2. Procédé selon la revendication 1, dans lequel une piste au moins comprend un certain nombre de fichiers ayant des noms de fichiers, étant utilisée pour générer le bloc de données d'identification avec de plus les noms de fichiers pour générer un troisième bloc de données d'identification.

3. Procédé selon la revendication 2, dans lequel des caractères des noms de fichiers sont chacun individuellement portillonnés par une fonction OU-exclusif.

4. Procédé selon la revendication 2, dans lequel on utilise en plus, pour la génération du bloc de données d'identification, un quatrième bloc d'identification de partie, le nombre total de fichiers, qui est formé du nombre de fichiers, étant utilisé pour générer le quatrième bloc de données d'identification.

5. Procédé selon la revendication 1, dans lequel un bloc de données ayant quatre octets est généré comme un bloc de données d'identification.

6. Procédé selon la revendication 5, dans lequel un bloc de données ayant un octet unique est généré comme un deuxième bloc d'identification de partie et, pendant le portillonnage OU-exclusif pour générer le bloc de données d'identification, ce deuxième bloc d'identification de partie est placé à la quatrième position d'octet dans le bloc de données d'identification.

7. Procédé selon la revendication 5, dans lequel un bloc de données ayant trois octets est généré comme un premier bloc d'identification de partie et, pendant la génération du bloc de données d'identification, ce premier bloc d'identification de partie est placé à la deuxième position d'octet dans le bloc de données d'identification.

8. Aménagement (10) de génération d'un bloc de données d'identification pour un support de données (41), ce support de données (41) comprenant au moins une piste, dans lequel chaque piste est définie par un élément d'information de position de début, cet aménagement (10) comprenant les moyens énumérés ci-après, à savoir des moyens de détermination (51) pour déterminer l'élément d'information de position de début, des moyens de portillonnage (59) pour générer le bloc de données d'identification par le portillonnage des blocs d'identification de partie, des premiers moyens de génération (54) pour générer un premier bloc d'identification de partie à partir des éléments d'information de position de début et des deuxièmes moyens de génération (55) pour générer un deuxième bloc d'identification de partie à partir d'un total par le nombre de pistes sur le support de données, **caractérisé en ce que** les premiers moyens de génération (54) sont aménagés pour générer le premier bloc identification de partie au moyen d'une opération de portillonnage OU-exclusif et **en ce que** les moyens de portillonnage (59) sont aménagés pour générer le bloc de données d'identification au moyen d'une fonction OU-exclusif.

9. Aménagement (10) selon la revendication 8, dans lequel des troisièmes moyens de génération (56) sont fournis, qui sont aménagés pour générer un troisième bloc d'identification de partie à partir de noms de fichiers de fichiers qui sont contenus dans les pistes sur le support de données.

10. Aménagement (10) selon la revendication 9, dans lequel les troisièmes moyens de génération (56) sont aménagés pour générer un troisième bloc d'identification de partie au moyen d'une opération de portillonnage OU-exclusif.

11. Aménagement (10) selon la revendication 8, dans lequel des quatrièmes moyens de génération (57) sont fournis, qui sont aménagés pour générer un quatrième bloc d'identification de partie pour générer le bloc de données d'identification, un nombre total de fichiers qui représentent le nombre de fichiers qui sont contenus dans les pistes sur le support de données étant utilisé à cet effet.

12. Produit logiciel informatique, ce produit logiciel informatique pouvant être chargé directement dans un moyen de stockage interne d'un ordinateur et comprenant des sections de code logiciel pour réaliser le procédé selon la revendication 1 avec l'ordinateur quand le produit logiciel informatique est exécuté sur l'ordinateur.

13. Produit logiciel informatique selon la revendication 12, dans lequel le produit est stocké sur un support lisible par ordinateur.

14. Ordinateur pourvu d'une unité de traitement et d'un moyen de stockage interne, cet ordinateur exécutant le produit logiciel informatique selon la revendication 12.

Fig.1

Fig.4

Fig. 2

Fig. 3

**EP 1 520 276 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9705616 A
- US 6304523 B
- WO 9825269 A